# FASCICULE DE BREVET EUROPEEN

(11) **EP 4 094 405 B1**
(45) Date de publication et mention de la délivrance du brevet: **11.09.2024**
(21) Numéro de dépôt: 21706016.9
(22) Date de dépôt: 18.01.2021
(51) Int. Cl.: H04L 41/28, H04L 41/0213, H04L 9/40, H04L 41/042

(54) **TECHNIQUE D'ADMINISTRATION A DISTANCE D'UN DISPOSITIF PAR UN SERVEUR D'ADMINISTRATION**
VERFAHREN ZUR FERNVERWALTUNG EINER VORRICHTUNG DURCH EINEN VERWALTUNGSSERVER
TECHNIQUE FOR REMOTE ADMINISTRATION OF A DEVICE BY AN ADMINISTRATION SERVER

(30) Priorité: 20.01.2020 FR 2000541
(43) Date de publication de la demande: 30.11.2022
(73) Titulaire: Orange, 92130 Issy-les-Moulineaux (FR)
(72) Inventeur: FLURY, Thibaud, 92326 CHÂTILLON CEDEX (FR); MEZGHANI, Emna, 92326 CHÂTILLON CEDEX (FR)
(86) Numéro de dépôt international: PCT/FR2021/050079
(87) Numéro de publication internationale: WO 2021/148741

(56) Documents cités:
- WO-A1-2016/007813
- US-A1- 2006 120 305

## Description

L'invention se rapporte au domaine général des télécommunications.

L'invention concerne plus particulièrement une technique d'administration à distance d'un dispositif par un serveur d'administration.

Afin de garantir des services de qualité, il est préférable qu'un opérateur de réseau puisse administrer à distance des dispositifs.

L'administration à distance des dispositifs nécessite notamment :
- de détecter et de connaître les dispositifs administrés, par exemple leurs numéros de série, leurs versions matérielle et logicielle ;
- de superviser ces dispositifs, par exemple en obtenant des informations de supervision et des indicateurs de performance.

On se place par la suite dans le ca d'un réseau local. Dans ce réseau, une passerelle d'accès permet notamment à des dispositifs localisés dans un site client d'accéder à un réseau de communication étendu WAN (pour « Wide Area Network »), tel que le réseau Internet. Pour un réseau local, ces dispositifs correspondent par exemple à la passerelle d'accès, un décodeur TV « Set-Top-Box », un terminal mobile. Dans le contexte d'un réseau domotique, il s'agit également d'équipements d'électroménager, de systèmes d'alarme, de capteurs.

La gestion à distance des dispositifs d'un réseau local s'appuie par exemple sur un rapport technique élaboré par le Broadband Forum, TR-069 « CPE WAN Management Protocol ». Ces dispositifs sont également appelés CPE, pour « *Customer Premises Equipment* ». Ce rapport technique définit un protocole CWMP, spécifiant la communication entre un serveur d'administration, appelé serveur d'auto-configuration ACS (pour « Auto-configuration Server »), et un dispositif distant. Le protocole CWMP définit un mécanisme qui permet notamment une auto-configuration sécurisée des dispositifs distants et d'autres fonctions de gestion de ces dispositifs.

Il est notamment possible à l'opérateur du réseau d'effectuer des interventions à distance, telles que :
- mettre à jour le logiciel (« software ») ou le microcode (« firmware ») d'un dispositif, lorsqu'une évolution de la version logicielle ou du microcode est requise ;
- effectuer un diagnostic lorsqu'un dispositif présente un dysfonctionnement ;
- installer et configurer dynamiquement de nouveaux services ;
- superviser l'état de fonctionnement et les performances d'un dispositif.

Certains dispositifs mettent en oeuvre plusieurs services. De plus, le nombre des dispositifs à administrer augmente, en raison de l'intégration d'objets connectés dans les réseaux de communication. Il devient ainsi de plus en plus difficile à un opérateur de réseau d'administrer à distance ces différents dispositifs et leurs différents services. En effet, l'architecture proposée repose sur une vision centralisée de l'administration. Les protocoles mis en oeuvre sont centralisés et imposent au serveur d'administration référent et à l'opérateur de réseau d'avoir une vision globale du périmètre fonctionnel des dispositifs. Seul le serveur d'administration référent dispose de l'ensemble des droits sur un dispositif qu'il administre. De plus, ces objets connectés s'enrichissent en permanence de nouvelles fonctionnalités, qui entraînent une mise à jour du logiciel embarqué.

La demande de brevet US2006120305A1 décrit un procédé de gestion à distance de dispositifs d'un réseau local comprenant une passerelle de routage, par plusieurs serveurs ACS.

La demande de brevet WO2016007813A1 décrit un transfert de l'autorité de gestion d'un client entre des serveurs de gestion de dispositifs.

Un des buts de l'invention est de remédier à des insuffisances/inconvénients de l'état de la technique et/ou d'y apporter des améliorations.

Selon un premier aspect, l'invention a pour objet un procédé d'administration à distance d'un dispositif à administrer selon la revendication 1.

La technique proposée permet ainsi de déléguer à un serveur d'administration tiers des droits afin de réaliser des opérations d'administration et de configuration sur des dispositifs. Ces dispositifs sont par exemple connectés au réseau local d'un client de l'opérateur, dans un environnement de confiance. Le dispositif relai est par exemple une passerelle d'accès permettant un accès à un réseau de communication étendu à des dispositifs du réseau local. La technique proposée permet ainsi de mettre en oeuvre dynamiquement sur le dispositif relai une fonction relai sous la forme d'un filtre qui va permettre de vérifier que les échanges entre le serveur d'administration tiers et le dispositif à administrer s'effectuent bien dans le périmètre de la délégation, c'est-à-dire en fonction des droits qui sont attribués au serveur d'administration tiers.

Le filtre peut par exemple vérifier que les échanges entre le serveur d'administration tiers et le dispositif à administrer sont bien relatifs à un service donné. Le serveur d'administration tiers dispose alors de droits pour effectuer des opérations d'administration et de configuration pour ce service. A titre d'exemple illustratif, il peut s'agit d'un service tel que la Maison Connectée. Le serveur d'administration référent délègue alors à un serveur d'administration tiers l'administration de ce service pour les dispositifs concernés dans le réseau local. Ceci permet de décharger le serveur d'administration référent vers le serveur d'administration tiers.

La technique proposée est mise en oeuvre dans un environnement qui garantit un niveau de sécurité et de confiance.

Un dispositif relai peut mettre en oeuvre plusieurs filtres, chacun de ces filtres étant associé à un dispositif particulier.

Un serveur tiers peut être dédié à l'administration d'un ensemble de dispositifs de même type.

La technique proposée permet également de faire évoluer l'architecture d'administration mise en oeuvre dans les réseaux des opérateurs vers une architecture multiserveur telle qu'actuellement en cours de normalisation par des organismes tels que le Broadband Forum (USP pour « *User Services Platform* ») ou bien l'alliance Open Mobile Alliance OMA (LwM2M pour « *Lightweight Machine to Machine »).*

La technique proposée permet également de la prise en charge de l'administration de dispositifs de plus en plus nombreux par l'architecture d'administration mise en oeuvre dans les réseaux des opérateurs.

Les différents modes ou caractéristiques de réalisation mentionnés ci-après peuvent être ajoutés indépendamment ou en combinaison les uns avec les autres, au procédé d'administration à distance d'un dispositif tel que défini précédemment.

Dans un mode de réalisation particulier, le filtre est en outre appliqué à un message reçu du dispositif à administrer et à destination du serveur d'administration tiers, le message reçu étant filtré par le filtre lorsqu'il n'est pas conforme aux droits attribués au serveur d'administration tiers. Ceci permet de vérifier la conformité des messages par rapport aux droits attribués dans les deux sens de communication, du serveur tiers vers le dispositif à administrer et réciproquement.

Dans un mode de réalisation particulier, la demande d'activation comprend une durée de délégation, à l'issue de laquelle le filtre est désactivé.

Ceci permet de limiter dans le temps la délégation. A l'issue de cette durée de délégation, le dispositif est de nouveau administré par le serveur d'administration référent.

Dans un mode de réalisation particulier, la demande d'activation comprend une condition associée au dispositif relai et le filtre n'est pas activé ou est désactivé lorsque ladite condition n'est pas respectée.

Ceci permet de ne pas consommer les ressources du dispositif relai, par exemple sa charge processeur ou bien encore ses ressources énergétiques, lorsque ses ressources ne vérifient pas la condition demandée. Dans ce cas, demander au dispositif relai d'activer la fonction relai le mettrait dans de mauvaises conditions pour fonctionner.

Dans un mode de réalisation particulier, le procédé comprend en outre pour désactiver le filtre, un envoi par le dispositif relai au dispositif à administrer d'un changement de serveur d'administration vers le serveur d'administration référent.

Ceci permet au dispositif relai de basculer l'administration du dispositif dans la situation nominale, c'est-à-dire une administration du dispositif par le serveur d'administration référent.

Dans un mode de réalisation particulier, les informations relatives à des droits attribués au serveur d'administration tiers comprennent une partie d'un modèle de données exposé par le dispositif à administrer, pour laquelle le serveur d'administration tiers dispose desdits droits.

Ceci permet au dispositif relai de connaître exactement la délégation qui est donnée au serveur d'administration tiers. Des droits en lecture ou écriture peuvent alors être associés à une partie du modèle de données exposé par le dispositif. Le dispositif relai en déduit le filtre à appliquer et instancie dynamiquement ce filtre chargé de vérifier le bon usage de ces droits.

Dans un mode de réalisation particulier, les informations relatives à des droits attribués à un serveur d'administration tiers comprennent en outre une opération d'administration autorisée.

Ceci permet d'apporter des précisions opération par opération. La délégation donnée peut ainsi être définie très précisément.

Dans un mode de réalisation particulier, le filtre bloque un message reçu lorsqu'il n'est pas conforme aux droits attribués au serveur d'administration tiers.

Ce filtre peut s'appliquer au sens de communication du serveur d'administration tiers vers le dispositif à administrer qu'aux deux sens de communication entre le serveur d'administration tiers et le dispositif à administrer.

Selon un deuxième aspect, l'invention concerne un dispositif relai, configuré pour être administré à distance par un serveur d'administration référent selon la revendication 8.

Les avantages énoncés pour le procédé d'administration à distance d'un dispositif selon le premier aspect sont transposables directement à un dispositif relai.

Ce dispositif relai peut bien entendu comporter en termes structurels les différentes caractéristiques relatives au procédé d'administration à distance d'un dispositif tel que décrit précédemment, qui peuvent être combinées ou prises isolément.

Selon un troisième aspect, l'invention concerne un système d'administration comprenant un dispositif relai selon le deuxième aspect, un serveur d'administration référent et un serveur d'administration tiers.

Les avantages énoncés pour le procédé d'administration à distance d'un dispositif selon le premier aspect sont transposables directement à un système d'administration.

Ce système d'administration peut bien entendu comporter en termes structurels les différentes caractéristiques relatives au procédé d'administration à distance d'un dispositif tel que décrit précédemment, qui peuvent être combinées ou prises isolément.

Selon un quatrième aspect, l'invention concerne un programme pour un dispositif relai, comprenant des instructions de code de programme destinées à commander l'exécution des étapes du procédé d'administration à distance d'un dispositif à administrer précédemment décrit mises en oeuvre par un dispositif relai, lorsque ce programme est exécuté par ce dispositif relai et un support d'enregistrement lisible par un dispositif relai sur lequel est enregistré un programme pour un dispositif relai.

Les avantages énoncés pour le procédé d'administration à distance d'un dispositif à administrer selon le premier aspect sont transposables directement au programme pour un dispositif relai et au support d'enregistrement.

La technique d'administration à distance d'un dispositif sera mieux comprise à l'aide de la description suivante de modes de réalisation particuliers, en référence aux dessins annexés sur lesquels :
- la figure 1 représente un environnement dans lequel est mis en oeuvre le procédé d'administration à distance d'un dispositif dans un mode de réalisation particulier ;
- la figure 2A illustre des étapes d'un procédé d'administration à distance d'un dispositif selon un mode de réalisation particulier ;
- la figure 2B illustre des étapes d'un procédé d'administration à distance d'un dispositif selon un mode de réalisation particulier ;
- la figure 3 représente un dispositif relai dans un mode de réalisation particulier.

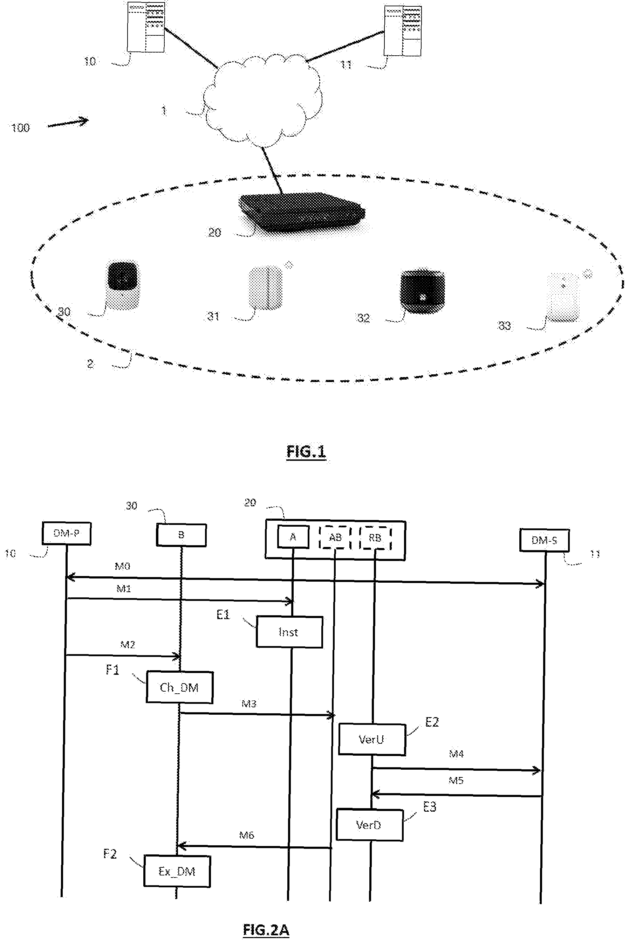

L'environnement représenté à la **figure** 1 correspond à celui de l'administration à distance de dispositifs d'un réseau local. Il est donné ici à titre illustratif, la technique d'administration à distance pouvant être mise en oeuvre dans d'autres environnements. La figure 1 représente un système 100 dans lequel est mis en oeuvre le procédé d'administration à distance d'un dispositif dans un mode de réalisation particulier. Ce système 1 comprend :
- un serveur d'administration principal ou référent 10 ;
- un serveur d'administration tiers ou délégué 11 ;
- un dispositif 20, dit dispositif relai.

La figure 1 représente une pluralité de dispositifs d'un réseau local administrés à distance par le serveur d'administration référent 10. Cette administration par le serveur référent correspond à une situation nominale. Le protocole IP (pour « Internet Protocol ») est utilisé par les dispositifs pour communiquer entre eux dans le réseau local et également pour communiquer avec un réseau de communication étendu ou WAN (pour « Wide Area Network »), tel que le réseau Internet, non représenté sur la figure 1.

Pour l'environnement représenté à la figure 1, on entend par réseau de communication local un réseau de type LAN (« *Local Area Network* »). Ce réseau peut être en particulier un réseau domestique ou un réseau d'entreprise. Une passerelle d'accès 20 est agencée pour fournir à des dispositifs du réseau local un accès vers le réseau de communication étendu (par exemple Internet) par l'intermédiaire d'un réseau d'accès. Le réseau d'accès 1 est par exemple un réseau d'accès xDSL (pour « *Digital Subscriber Line* », le x indiquant qu'il peut s'agir d'un réseau ADSL, HDSL, VDSL, ...). Il peut également s'agir d'un réseau FTTH (pour *«Fiber To The Home »).* Aucune limitation n'est attachée au type du réseau d'accès.

Le réseau local 2 peut s'appuyer sur différentes technologies d'accès telles que filaire de type Ethernet, selon la norme IEEE 802.3, sans fil de type Wi-Fi, selon la norme IEEE 802.11, Zwave, Zigbee, ou bien encore par courant porteur en ligne CPL. Il est bien entendu que ces différentes technologies d'accès peuvent cohabiter.

Par la suite, la passerelle d'accès 20 joue le rôle d'un dispositif relai dans le cadre de l'administration à distance d'un des dispositifs du réseau local. Plus précisément, la passerelle d'accès met en oeuvre une fonction relai pour l'administration du dispositif à administrer par un serveur d'administration tiers.

Les dispositifs d'un réseau local 2 peuvent être n'importe quels dispositifs, par exemple domestiques, disposant d'une connexion réseau filaire ou sans-fil. Il peut s'agir par exemple, d'une caméra 30, d'un détecteur d'ouverture de porte ou de fenêtre 31, d'un assistant vocal 32, d'un détecteur de mouvement 33, d'un décodeur TV (« *Set-Top Box* »), d'une console de jeux, de dispositifs électroménagers, etc. On se limite par la suite à des dispositifs administrés à distance par le serveur d'administration référent 10. De tels dispositifs contribuent à la mise en oeuvre d'un service fourni par l'opérateur chez un client. A ce titre, ils fournissent un service à un utilisateur. On se place par la suite à titre illustratif dans le cadre d'un réseau local domestique. Aucune limitation n'est attachée à cet exemple particulier et la description qui suit est aisément transposable à un réseau local de type réseau d'entreprise. Elle est également transposable à tout type de dispositif à administrer à distance.

Le serveur d'administration référent 10 permet à l'opérateur du réseau de communication d'administrer et de superviser des dispositifs, notamment des dispositifs appartenant à des réseaux locaux, dont la passerelle d'accès 20 et les dispositifs du réseau local 30-33. Le serveur d'administration référent 10 est également appelé serveur d'auto-configuration ACS (pour « *Auto-Configuration Server »).*

Dans le mode de réalisation décrit, le serveur d'administration référent 10 dialogue avec les dispositifs du réseau local 2 en vue de leur administration selon le protocole de gestion à distance CWMP (« *CPE WAN Management Protocol* ») défini dans le rapport technique TR-069 élaboré par le Broadband Forum, par exemple l'Amendement 6, daté de mars 2018. Les modèles de données utilisées par le protocole CWMP sont définis dans le rapport technique TR-106 « Data Model Template for CWMP Endpoints and USP Agents », par exemple la version Issue 1 Amendment 8, datée de mars 2018 et dans le rapport technique TR-181 « Device Data Model for TR-069 », par exemple la version Issue 2 Amendment 13, datée de septembre 2019. Ces modèles de données sont implémentés sous la forme d'une structure arborescente en langage XML. Le protocole CWMP s'appuie sur le protocole Internet, plus précisément sur TCP/IP (pour « *Transmission Control Protocol* »). Les dispositifs sont également appelés CPE, pour « *Customer Premises Equipment ».*

Les modes de réalisation sont décrits pour des dispositifs à administrer localisés dans un réseau local et pour un protocole d'administration particulier. Aucune limitation n'est attachée à cet exemple de réalisation. Dans d'autres modes de réalisation, il est par exemple possible de mettre en oeuvre la spécification OMA-Device Management définie par l'organisation OMA (pour « *Open Mobile Alliance* ») pour l'administration de terminaux mobiles, par exemple la version approuvée 2.0.

Au moyen du protocole CWMP, le serveur d'administration référent 10 peut notamment :
- obtenir et gérer à distance la configuration d'un dispositif ;
- initier des tests de diagnostics ;
- télécharger des fichiers de logiciel ou de microcode et
- gérer des événements.

Dans le cas d'une passerelle d'accès, le serveur d'administration référent 10 peut également obtenir des informations relatives aux dispositifs qui sont connectés à la passerelle d'accès.

L'application d'administration à distance utilise le protocole CWMP et s'appuie sur des standards protocolaires TCP/IP, SSL/TLS (pour « *Secure Sockets Layer* / *Transport Layer Security* », HTTP (pour « *HyperText Transfer Protocol* »), SOAP (pour « *Simple Object Access Protocol* »), RPC (pour « *Remote Procedure Call »).*

Sur la figure 1 est également représenté un serveur d'administration tiers 11. Ce serveur tiers 11 peut effectuer les mêmes opérations d'administration que le serveur d'administration référent 10. Toutefois, ces opérations sont limitées en fonction des droits que le serveur d'administration référent 10 lui délègue.

Le modèle de données exposé par un dispositif est structuré sous la forme d'un arbre. Pour chaque feuille de l'arbre, des droits de lecture et/ou d'écriture sont attribués au serveur d'administration tiers 11 par le serveur d'administration référent 10. Il s'agit d'une délégation effectuée par le serveur référent 10 au serveur tiers 11. Une fois cette délégation effectuée, le serveur tiers 11 dispose des droits attribués et peut effectuer des opérations d'administration dans la limite de ces droits. Ces opérations d'administration sont par exemple : lecture ou écriture d'un paramètre, ordre de téléchargement, action à distance telle qu'un redémarrage,... Une opération d'administration en dehors des droits attribués n'est pas autorisée.

Dans un mode de réalisation particulier, le serveur référent 10 spécifie également quelles sont les opérations d'administration pour lesquelles le serveur tiers 11 dispose de la délégation. Dans ce mode de réalisation, une opération d'administration qui n'est pas spécifiée n'est pas autorisée.

Dans un mode de réalisation particulier, une durée de délégation est également définie, à l'issue de laquelle le serveur référent 10 récupère l'ensemble des droits sur le dispositif (y compris les droits qu'il avait délégués au serveur tiers 11).

Dans un mode de réalisation particulier, une condition est associée au dispositif relai. Cette condition correspond par exemple à un niveau de batterie requis, un seuil de ressource processeur, une bande passante disponible, un seuil de ressources mémoire disponibles, un nombre d'opérations autorisées, etc. Cette ou ces conditions peuvent être vérifiées :
- lors de l'activation de la fonction relai et dans ce cas l'activation est refusée ;
- ou bien une fois la fonction relai activée, et dans ce cas la fonction relai est désactivée, le serveur référent 10 récupérant l'ensemble des droits sur le dispositif.

La vérification de ces conditions vise à garantir que le dispositif relai ne subira pas de dégradation de sa qualité de service, du fait de la mise en oeuvre de la fonction relai.

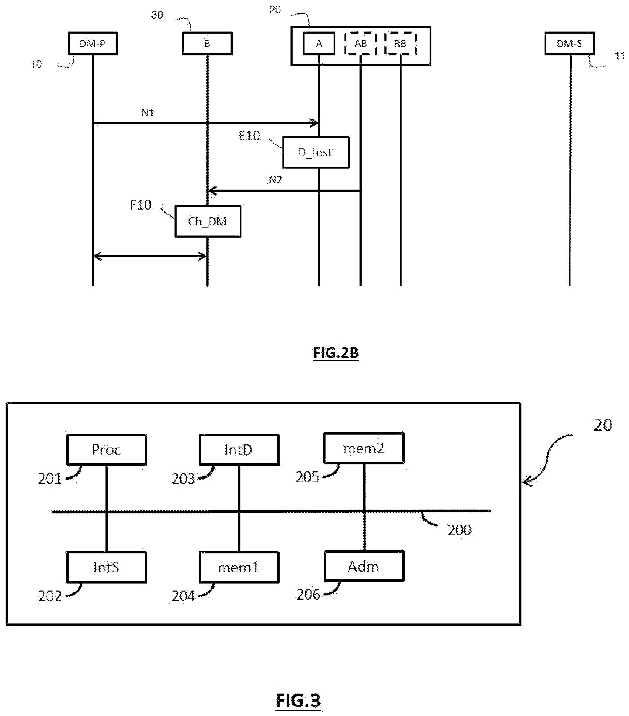

Le procédé d'administration à distance d'un dispositif va maintenant être décrit en relation avec les figures 2A et 2B dans un système 100 tel que représenté à la figure 1. On se place par la suite au niveau de la passerelle d'accès 20, jouant le rôle du dispositif relai. Le dispositif à administrer est le dispositif 30.

Des étapes du procédé d'administration à distance du dispositif 30 sont décrites en relation avec la figure 2A selon un mode de réalisation particulier.

Sur la figure 2A, le dispositif à administrer 30 est noté B. Ce dispositif 30 est en situation nominale administré par le serveur référent 10. Le dispositif relai 20 comprend alors trois modules fonctionnels :
- un premier module d'administration, noté A, pour l'administration du dispositif relai 20 en coopération avec le serveur référent 10 ;
- un deuxième module d'administration relai, noté RB, qui joue le rôle d'un client vis-à-vis du serveur d'administration tiers 11 pour administrer le dispositif à administrer B ;
- un troisième module d'administration relai vers le dispositif à administrer B, noté AB, qui joue le rôle d'un serveur d'administration pour administrer le dispositif à administrer B.

Les deuxième et troisième modules d'administration relai forment la fonction relai mise en oeuvre par le dispositif relai 20. En situation nominale pour l'administration du dispositif 30, les deuxième et troisième modules d'administration relai ne sont pas instanciés.

Une phase d'initialisation, symbolisée par un échange M0 sur la figure 1A, est mise en oeuvre par le serveur d'administration référent 10 et le serveur d'administration tiers 11. Cette phase permet de définir, en fonction de l'opération d'administration à réaliser et le dispositif concerné par la délégation, les droits attribués par le serveur référent 10 au serveur tiers 11, la durée de la délégation et les conditions associées au dispositif relai le cas échéant.

Une fois cette phase d'initialisation effectuée, le serveur référent 10 envoie au dispositif relai 20 une demande d'activation M1 de la fonction relai, plus précisément d'un filtre, pour l'administration du dispositif 30. Cette demande d'activation comprend des informations relatives à des droits attribués au serveur d'administration tiers 11 pour une délégation de l'administration du dispositif 30. Plus précisément, cette demande d'activation M1 comprend entre autres :
- un identifiant du dispositif à administrer, en particulier une adresse IP permettant de le joindre ;
- des droits attribués à un serveur tiers dans le cadre de la délégation, que la fonction relai doit vérifier ;

- une adresse du serveur tiers 11 ;
- le cas échéant, une ou des conditions associées au dispositif relai, à vérifier par ce dernier ;
- le cas échéant, une politique à appliquer lorsque les droits ne sont pas respectés. Dans un mode de réalisation particulier, une politique par défaut est définie pour la mise en oeuvre de la fonction relai. Cette politique vise à définir les actions complémentaires au filtrage que doit effectuer le dispositif relai quand il reçoit un message qui n'est pas conforme aux droits attribués au serveur d'administration tiers dans le cadre de la délégation. Ces actions correspondent par exemple à sauvegarder le message dans un historique de messages filtrés, à sauvegarder le message pour un traitement ultérieur, à envoyer une alerte au serveur référent 10, à désactiver la fonction relai.

Dans un mode de réalisation particulier, les informations relatives à des droits attribués au serveur d'administration tiers comprennent une partie d'un modèle de données exposé par le dispositif à administrer, pour laquelle le serveur tiers 11 dispose de ces droits.

Dans un mode de réalisation particulier, les informations relatives à des droits attribués à un serveur d'administration tiers comprennent en outre une opération d'administration autorisée. On rappelle que dans ce mode de réalisation, par défaut toutes les opérations d'administration sont interdites et que seules les opérations précisées explicitement sont autorisées.

Dans un mode de réalisation particulier, le modèle de données exposé par le dispositif relai comprend des paramètres spécifiques pour la mise en oeuvre de la fonction relai et la demande d'activation est conforme au protocole d'administration utilisé (CWMP dans le mode de réalisation décrit). Dans un autre mode de réalisation particulier, le dispositif relai expose une interface de programmation d'applications API (pour *«Applications Programming Interface »)* par exemple sous la forme d'un Web service s'interfaçant avec un protocole d'accès SOAP (pour « *Simple Object Access Protocol* ») et ou Rest (pour « *Representational State Transfer* ») ou d'un bus de données (ou « *Message-oriented middleware »* en anglais) orienté messages dans un mode de fonctionnement Publish-Subscribe, par exemple en utilisant le protocole de messagerie MQTT (pour « *Message Queuing Telemetry Transport »).*

Cette demande d'activation M1 de la fonction relai est reçue par le dispositif relai 20 dans une étape E1. Lorsque la demande d'activation M1 comprend une ou des conditions à vérifier, le dispositif relai 20 vérifie que cette ou ces conditions sont respectées. Si tel n'est pas le cas, la demande d'activation est refusée. Toujours dans cette étape E1, le dispositif relai 20 active la fonction relai pour ce dispositif à administrer 30. Plus précisément, le dispositif relai 20 instancie les deuxième et troisième modules d'administration relai. Puis, le dispositif relai 20 définit un filtre à appliquer aux messages reçus du serveur tiers 11 pour administrer le dispositif 30 en fonction des droits attribués au serveur tiers 11 et de la politique reçue le cas échéant. Ce filtre permet de bloquer ou de modifier un message reçu lorsqu'il n'est pas conforme aux droits attribués au serveur d'administration tiers dans le cadre de la délégation. Dans un mode de réalisation particulier, le filtre à appliquer est également défini pour les messages reçus du dispositif à administrer 30 à destination du serveur tiers 11. Une fois la fonction relai activée, le dispositif relai 20 notifie le serveur référent 10 de l'exécution de la demande d'activation.

Le serveur référent 10 notifie alors le dispositif à administrer 30 d'un changement de serveur d'administration. Plus précisément, il envoie au dispositif à administrer 30 une notification M2 indiquant que les opérations d'administration seront désormais effectuées par le troisième module d'administration relai AB. Cette notification M2 est conforme au protocole d'administration utilisé. Par exemple, ce message M2 correspond pour le protocole CWMP à un ordre « Set Parameter Value » sur le paramètre « Device.ManagementServer.URL » en spécifiant l'adresse réseau du troisième module d'administration relai AB. Il peut également s'agir d'une requête envoyée par le serveur référent 10 au dispositif à administrer 30.

Il est ici souligné que le serveur référent 10 ne peut plus effectuer d'opérations d'administration à distance sur le dispositif 30, même pour des opérations en dehors de la délégation. En effet, à un instant donné, le dispositif à administrer 30 ne connaît qu'un seul serveur d'administration. Cette notification M2 est reçue par le dispositif 30 dans une étape F1.

Une fois ces échanges de message effectués, les différents dispositifs et serveurs sont configurés pour permettre une administration du dispositif 30 par le serveur tiers 11 et par l'intermédiaire de la fonction relai mise en oeuvre par le dispositif relai 20, dans le périmètre de la délégation accordée par le serveur référent 10 au serveur tiers 11.

La fonction relai mise en oeuvre par le dispositif relai 20 pour la communication du dispositif à administrer 30 vers le serveur tiers 11 est mise en oeuvre de la façon suivante. Le dispositif relai 20 reçoit un message M3 en provenance du dispositif à administrer 30. Plus précisément le message M3 est reçu par le troisième module d'administration relai AB, ce dernier jouant le rôle du serveur d'administration pour le dispositif 30. Il s'agit par exemple d'un message d'établissement d'une session d'administration conforme au protocole d'administration utilisé. Plus précisément pour le protocole CWMP, le dispositif 30 établit une session avec le troisième module d'administration relai AB en se présentant avec un événement « 0 BOOTSTRAP ». Il est ici rappelé qu'il s'agit d'un exemple illustratif et que le procédé décrit est mis en oeuvre pour tout type de message M3 transmis par le dispositif 30 à destination de son serveur d'administration courant (le troisième module d'administration relai AB dans le cas décrit).

Ce message M3 est reçu par le dispositif relai 20 dans une étape E2. Le dispositif relai 20 applique dans cette étape E2 le filtre, afin de vérifier que le message M3 est conforme aux droits attribués au serveur tiers. Si tel est le cas, le message M3 est retransmis sous la forme d'un message M4 par le deuxième module d'administration relai RB vers le serveur tiers 11. Dans le cas contraire, le message M3 est filtré par le dispositif relai 20. Le message M3 est ainsi modifié en supprimant des parties du modèle de données qui ne sont pas conformes aux droits attribués au serveur tiers, afin d'être conforme à ces droits. Le message M3 modifié est retransmis sous la forme d'un message M4 par le deuxième module d'administration relai RB vers le serveur tiers 11. En fonction de la politique applicable, une action complémentaire au filtrage du message peut être mise en oeuvre par le dispositif relai 20.

La fonction relai mise en oeuvre par le dispositif relai 20 pour la communication du serveur tiers 11 vers le dispositif à administrer 30 est mise en oeuvre de la façon suivante. Le serveur tiers 11 envoie un message M5 à destination du dispositif relai, plus précisément du deuxième module d'administration relai RB. On souligne ici que le protocole CWMP tel que spécifié dans le rapport TR-069 définit que la communication est toujours à l'initiative du dispositif 30, et que l'ordre en provenance du serveur est transmis dans la réponse. La réponse comprend un ordre Set Parameter Values sur des paramètres du modèle de données. Toutefois, ce message M5 peut également correspondre à un message « 6 CONNECTION REQUEST » permettant de forcer le dispositif 30 à établir une session d'administration. Ce message M5 est reçu par le dispositif relai 20 dans une étape E3. Toujours au cours de cette étape E3, le dispositif relai 20 applique le filtre, afin de vérifier que le message M5 est conforme aux droits attribués au serveur tiers 11. Si tel est le cas, le message M5 est retransmis sous la forme d'un message M6 par le troisième module d'administration relai AB vers le dispositif à administrer 30. Dans le cas contraire, le message M5 est modifié en supprimant des parties du modèle de données qui ne sont pas conformes aux droits attribués au serveur tiers, afin d'être conforme à ces droits. Dans ce cas, le message M5 filtré est retransmis sous la forme d'un message M6 par le troisième module d'administration relai AB vers le dispositif à administrer 30. En fonction de la politique applicable, une action complémentaire au filtrage du message peut être mise en oeuvre par le dispositif relai 20.

Ce filtrage est mis en oeuvre par le dispositif relai 20 pour tout message reçu du serveur tiers 11 à destination du dispositif à administrer 30 (étape E3), et le cas échéant pour tout message reçu du dispositif à administrer 30 à destination du serveur tiers 11 (étape E2). Il reste activé tant qu'une durée de délégation n'est pas expirée ou que le serveur d'administration référent n'a pas demandé la désactivation de la fonction relai ou bien encore, le cas échéant, tant que les conditions sont satisfaites. La durée de délégation peut être définie par défaut ou bien transmise dans la demande d'activation M1. Dans un mode de réalisation particulier, le dispositif relai 20 vérifie régulièrement que la ou les conditions reçues dans la demande d'activation sont respectées. Si tel n'est pas le cas, le filtre est désactivé.

A l'issue de la durée de délégation, le filtre est désactivé. Cette désactivation du filtre et le retour à la situation nominale sont décrits ultérieurement.

Des étapes du procédé d'administration à distance d'un dispositif 30 sont décrites en relation avec la **figure 2B** selon un mode de réalisation particulier. Plus précisément, cette figure 2B illustre la désactivation de la fonction relai lorsqu'elle est initiée par le serveur d'administration référent 10, par exemple pour la réalisation d'une autre opération d'administration prioritaire (de sécurité par exemple).

Le serveur référent 10 envoie au dispositif relai 20 une demande de désactivation N1 de la fonction relai, plus précisément du filtre, pour l'administration du dispositif 30. Conformément à ce qui est décrit précédemment en relation avec la figure 2A pour l'activation de la fonction relai, la désactivation peut être demandée par un message protocolaire conforme au protocole d'administration utilisé, lorsque le modèle de données exposé par le dispositif relai comprend des paramètres spécifiques pour la mise en oeuvre de la fonction relai ou bien par l'interface de programmation, tel que décrit précédemment en relation avec la demande d'activation M1.

Cette demande N1 est reçue par le dispositif relai 20, plus précisément par le premier module d'administration A, dans une étape E10. Toujours dans cette étape E10, le dispositif relai 20, plus précisément le troisième module d'administration relai AB, notifie le dispositif 30 d'un changement de serveur d'administration. Plus précisément, il envoie une notification N2 indiquant que les opérations d'administration seront désormais effectuées par le serveur d'administration référent 10. Cette notification N2 est conforme au protocole d'administration utilisé. Cette notification N2 est similaire à la notification M2 décrite précédemment. Le dispositif relai 20 désactive également la fonction relai, plus précisément le filtre appliqué et les deuxième et troisième modules d'administration relai qui avaient été instanciés.

Cette notification N2 est reçue par le dispositif 30 dans une étape F10. L'administration du dispositif 30 est désormais effectuée par le serveur référent 10. Le système d'administration est de nouveau en situation nominale.

Cette procédure de désactivation est également applicable lorsque le dispositif relai 20 déclenche une désactivation de la fonction relai, par exemple lorsque la durée de délégation est expirée ou bien en cas de non-respect de conditions associées au dispositif relai. Elle est déclenchée de manière autonome par le dispositif relai 20 et non par la réception d'une demande de désactivation.

Les figures 2A et 2B ont été décrites en relation avec un dispositif 30 à administrer. Lorsque plusieurs dispositifs sont à administrer par un dispositif relai, alors ce dernier active pour chacun des dispositifs une fonction relai qui lui est associée. La passerelle d'accès 20 peut par exemple servir de relai dans l'administration de l'ensemble des dispositifs du réseau local. Ceci permet de diminuer fortement la charge induite par l'opération sur l'infrastructure de l'opérateur. En effet, ce dernier n'est plus en charge de l'opération d'administration, ce qui décharge son infrastructure aussi bien en termes de charge processeur que de charge associée aux échanges protocolaires. De plus, le serveur tiers peut dépendre du dispositif à administrer. Dans le réseau local, plusieurs dispositifs peuvent contribuer à un service Maison connectée, tandis que d'autres comme le décodeur TV contribuent au service TV. Dans cet exemple, un serveur tiers peut disposer de la délégation pour administrer les dispositifs concernés pour le service Maison Connectée, alors qu'un autre serveur tiers dispose de la délégation pour administrer les dispositifs concernés pour le service TV. De même, pour un même dispositif, un serveur tiers peut disposer de la délégation pour administrer ce dispositif pour le service Maison Connectée pendant une première durée de délégation, et ensuite un autre serveur tiers peut disposer de la délégation pour administrer ce dispositif pour un autre service pendant une deuxième durée de délégation.

Il est ici souligné que le dispositif relai 20 et le dispositif à administrer 30 peuvent être de même type (une passerelle d'accès servant de relai pour l'administration d'une autre passerelle d'accès) ou bien de type complément différent (tel que représenté dans l'environnement de la figure 1). Aucune limitation n'est attachée au type de ces dispositifs.

La délégation par l'intermédiaire d'un dispositif relai permet de rendre anonyme la connaissance mutuelle que le serveur tiers et le dispositif à administrer ont. Le serveur tiers ne dispose pas de l'adresse permettant de joindre le dispositif à administrer et n'a aucune visibilité sur des parties du modèle de données pour lesquelles les droits ne lui sont pas attribués grâce au filtrage dans le sens de communication remontant (du dispositif vers le serveur). De même, le dispositif à administrer ne dispose pas de l'adresse permettant de joindre le serveur tiers : il dispose uniquement de celle du dispositif relai.

Enfin, la fonction relai peut également prendre en charge des adaptations protocolaires qui seraient nécessaires pour administrer un dispositif ne supportant pas le protocole d'administration du serveur tiers. Ceci peut être le cas pour des objets connectés qui supportent des protocoles d'administration différents de celui supporté par le dispositif, comme LWM2M pour certains types d'objets connectés dits contraints (par exemple parce qu'ils ne supportent pas le protocole TCP/IP), ou des protocoles propriétaires.

La **figure 3** illustre de manière schématique un dispositif relai 20 configuré pour être administré à distance par un serveur d'administration référent dans un mode de réalisation particulier. Le dispositif relai 20 comprend notamment :
- un processeur matériel 201 pour exécuter des instructions de code de modules logiciels ;
- une zone mémoire 204, configurée pour mémoriser un programme qui comprend des instructions de code pour mettre en oeuvre des étapes du procédé d'administration à distance d'un dispositif à administrer ;
- une mémoire de stockage 205, configurée pour stocker des données utilisées lors de la mise en oeuvre du procédé d'administration à distance d'un dispositif à administrer, telles que des paramètres utilisés pour des calculs effectués par le processeur 201, des données intermédiaires de calculs effectués par le processeur 201, etc ;
- une première interface de réseau 202 ;
- une deuxième interface de réseau 203 ;
- un module d'administration 206 ;
qui sont connectés entre eux au travers d'un bus 200.

Bien entendu, les éléments constitutifs du dispositif relai peuvent être connectés au moyen d'une connexion autre qu'un bus.

Le processeur 201 commande les opérations du dispositif relai. La zone mémoire 204 stocke au moins un code de programme d'ordinateur qui lorsqu'il est exécuté par le processeur 201 met en oeuvre les différentes fonctions du dispositif relai, en particulier la fonction relai. Le processeur 201 peut être formé par tout matériel ou logiciel connu et approprié, ou par une combinaison de matériel et de logiciel. Par exemple, le processeur 201 peut être formé par un matériel dédié tel qu'un circuit de traitement, ou par une unité de traitement programmable telle qu'une unité centrale de traitement *(Central Processing Unit)* qui exécute un programme stocké dans une mémoire de celui-ci.

La zone mémoire 204 peut être formée par n'importe quel moyen approprié capable de stocker le programme d'une manière lisible par un ordinateur. Des exemples de zone mémoire 204 comprennent des supports de stockage non transitoires lisibles par ordinateur tels que des dispositifs de mémoire à semi-conducteurs, et des supports d'enregistrement magnétiques, optiques ou magnéto-optiques chargés dans une unité de lecture et d'écriture. Le programme amène le processeur 201 à exécuter un procédé d'administration à distance d'un dispositif selon un mode de réalisation particulier.

Une première interface réseau 202 fournit une connexion entre le dispositif relai 20 et un serveur d'administration, référent 10 ou tiers 20, par l'intermédiaire d'un réseau de communication s'appuyant sur un réseau d'accès sous-jacent. La première interface réseau 202 peut fournir, en fonction de sa nature, une connexion filaire ou sans fil.

Une deuxième interface réseau 203 fournit une connexion entre le dispositif relai 20 et un dispositif à administrer, par l'intermédiaire d'un réseau de communication s'appuyant sur un réseau d'accès sous-jacent. La deuxième interface réseau 203 peut fournir, en fonction de sa nature, une connexion filaire ou sans fil.

La première interface réseau 202 est configurée pour recevoir une demande d'activation d'un filtre pour l'administration d'un dispositif à administrer en provenance du serveur d'administration référent, cette demande d'activation comprenant des informations relatives à des droits attribués à un serveur d'administration tiers 11 pour une délégation de l'administration du dispositif à administrer.

Le module d'administration 206 est configuré pour administrer à distance le dispositif relai en relation avec le serveur d'administration référent. Le module d'administration 206 comprend notamment le module fonctionnel décrit précédemment, c'est-à-dire le premier module d'administration, noté A, en charge de l'administration du dispositif relai 20.

Le module d'administration 206 est en outre configuré pour traiter une telle demande d'activation reçue du serveur référent et pour appliquer un filtre à un message reçu du serveur d'administration tiers à destination du dispositif à administrer, le message reçu du serveur d'administration tiers étant filtré par le filtre lorsqu'il n'est pas conforme aux droits attribués au serveur d'administration tiers.

Le module d'administration 206 comprend notamment, une fois la fonction relai activée, les deux modules fonctionnels décrits précédemment : le deuxième module d'administration relai, noté RB, qui joue le rôle d'un client vis-à-vis du serveur d'administration tiers 11 pour administrer le dispositif à administrer B et le troisième module d'administration relai vers le dispositif à administrer B, noté AB, qui joue le rôle d'un serveur d'administration pour administrer le dispositif B.

Dans un mode de réalisation particulier, le module d'administration 206 est également configuré pour appliquer le filtre à un message reçu du dispositif à administrer et à destination du serveur d'administration tiers, le message reçu étant filtré par le filtre lorsqu'il n'est pas conforme aux droits attribués au serveur d'administration tiers.

Dans un mode de réalisation particulier, le module d'administration 206 est également configuré pour gérer une durée de délégation, comprise dans la demande d'activation, à l'issue de laquelle le filtre est désactivé.

Dans un mode de réalisation particulier, le module d'administration 206 est également configuré pour gérer une condition associée au dispositif relai et reçue dans la demande d'activation et pour refuser ou arrêter l'activation lorsque cette condition n'est pas respectée.

Dans un mode de réalisation particulier, le module d'administration 206 est également configuré pour envoyer au dispositif à administrer un changement de serveur d'administration vers le serveur d'administration référent pour désactiver le filtre.

Le filtre supprime des parties du message reçu non conformes aux droits attribués au serveur d'administration tiers.

Il est ici souligné que le dispositif relai 20 comprend également d'autres modules de traitement, non représentés sur la figure 3, agencés pour mettre en oeuvre les différentes fonctions de dispositif. L'implémentation de ce relai pourrait être effectuée en tant que service dormant et inactif par défaut dans le logiciel embarqué par les dispositifs à administrer, par exemple des objets connectés, gérés par l'opérateur et capables de le supporter.

La technique d'administration à distance d'un dispositif est mise en oeuvre au moyen de composants logiciels et/ou matériels. Dans cette optique, le terme "module" peut correspondre dans ce document aussi bien à un composant logiciel, qu'à un composant matériel ou à un ensemble de composants matériels et/ou logiciels, apte à mettre en oeuvre une fonction ou un ensemble de fonctions, selon ce qui est décrit précédemment pour le module concerné.

Un composant logiciel correspond à un ou plusieurs programmes d'ordinateur, un ou plusieurs sous-programmes d'un programme, ou de manière plus générale à tout élément d'un programme ou d'un logiciel. Un tel composant logiciel est stocké en mémoire puis chargé et exécuté par un processeur de données d'une entité physique et est susceptible d'accéder aux ressources matérielles de cette entité physique (mémoires, supports d'enregistrement, bus de communication, cartes électroniques d'entrées/sorties, interfaces utilisateur, etc).

De la même manière, un composant matériel correspond à tout élément d'un ensemble matériel (ou hardware). Il peut s'agir d'un composant matériel programmable ou non, avec ou sans processeur intégré pour l'exécution de logiciel. Il s'agit par exemple d'un circuit intégré, d'une carte à puce, d'une carte électronique pour l'exécution d'un micrologiciel (firmware), etc.

Dans un mode de réalisation particulier, le dispositif relai 20 est configuré pour mettre en oeuvre des étapes du procédé d'administration à distance d'un dispositif, mises en oeuvre par un dispositif relai. Il s'agit de préférence de modules logiciels comprenant des instructions logicielles pour faire exécuter les étapes (ou des actions) du procédé d'administration à distance d'un dispositif précédemment décrit, mises en oeuvre par un dispositif relai. L'invention concerne donc aussi :
- un programme pour un dispositif relai, comprenant des instructions de code de programme destinées à commander l'exécution des étapes (ou des actions) du procédé d'administration à distance d'un dispositif précédemment décrit, lorsque ledit programme est exécuté par ce dispositif relai ;
- un support d'enregistrement lisible par un dispositif relai sur lequel est enregistré le programme pour un dispositif relai.

Les modules logiciels peuvent être stockés dans ou transmis par un support de données. Celui-ci peut être un support matériel de stockage, par exemple un CD-ROM, une disquette magnétique ou un disque dur, ou bien un support de transmission tel qu'un signal électrique, optique ou radio, ou un réseau de télécommunication.

## Revendications

1. Procédé d'administration à distance d'un dispositif à administrer (30-33), ledit procédé comprenant :
- réception (E1) par un dispositif relai (20) d'une demande d'activation d'un filtre pour l'administration dudit dispositif en provenance d'un serveur d'administration (10) référent, ladite demande d'activation comprenant des informations relatives à des droits attribués à un serveur d'administration tiers (11) pour une délégation de l'administration du dispositif à administrer ;
- application du filtre (E3) par le dispositif relai à un message reçu du serveur d'administration tiers à destination du dispositif à administrer, dans lequel l'application du filtre comprend la vérification que le message reçu du serveur d'administration tiers est conforme aux droits attribués au serveur d'administration tiers, et la suppression de parties du message reçu non conformes aux droits attribués au serveur d'administration tiers.

2. Procédé selon la revendication 1, dans lequel le filtre est en outre appliqué (E2) à un message reçu du dispositif à administrer et à destination du serveur d'administration tiers, le message reçu étant filtré par le filtre lorsqu'il n'est pas conforme aux droits attribués au serveur d'administration tiers.

3. Procédé selon la revendication 1, dans lequel la demande d'activation comprend une durée de délégation, à l'issue de laquelle le filtre est désactivé.

4. Procédé selon la revendication 1, dans lequel la demande d'activation comprend une condition associée au dispositif relai et le filtre n'est pas activé ou est désactivé lorsque ladite condition n'est pas respectée.

5. Procédé selon la revendication 1, comprenant en outre pour désactiver le filtre, un envoi par le dispositif relai au dispositif à administrer d'un changement de serveur d'administration vers le serveur d'administration référent.

6. Procédé selon la revendication 1, dans lequel les informations relatives à des droits attribués au serveur d'administration tiers comprennent une partie d'un modèle de données exposé par le dispositif à administrer, pour laquelle le serveur d'administration tiers dispose desdits droits.

7. Procédé selon la revendication 1, dans lequel les informations relatives à des droits attribués à un serveur d'administration tiers comprennent en outre une opération d'administration autorisée.

8. Dispositif relai, configuré pour être administré à distance par un serveur d'administration (10) référent, ledit dispositif relai comprenant :
- un module de réception (202), configuré pour recevoir une demande d'activation d'un filtre pour l'administration d'un dispositif à administrer en provenance du serveur d'administration référent, ladite demande d'activation comprenant des informations relatives à des droits attribués à un serveur d'administration tiers (11) pour une délégation de l'administration du dispositif à administrer ;
- un module de filtrage (206), configuré pour appliquer un filtre à un message reçu du serveur d'administration tiers à destination du dispositif à administrer, dans lequel l'application du filtre comprend la vérification que le message reçu du serveur d'administration tiers est conforme aux droits attribués au serveur d'administration tiers et la suppression de parties du message reçu non conformes aux droits attribués au serveur d'administration tiers.

9. Système d'administration comprenant un dispositif relai (20) selon la revendication 8, un serveur d'administration référent (10) et un serveur d'administration tiers (11).

10. Programme pour un dispositif relai, comprenant des instructions de code de programme destinées à commander l'exécution des étapes du procédé d'administration à distance d'un dispositif à administrer selon l'une des revendications 1 à 7 mises en oeuvre par le dispositif relai, lorsque ledit programme est exécuté par ledit dispositif relai.

11. Support d'enregistrement lisible par un dispositif relai sur lequel est enregistré le programme selon la revendication 10.

## Patentansprüche

1. Verfahren zur Fernadministration einer zu administrierenden Vorrichtung (30-33), wobei das Verfahren umfasst:
- Empfangen (E1), durch eine Relaisvorrichtung (20), einer Anforderung zur Aktivierung eines Filters für die Administration der Vorrichtung von einem Verweis-Administrationsserver (10), wobei die Anforderung zur Aktivierung Informationen bezüglich von Berechtigungen umfasst, die einem Dritt-Administrationsserver (11) für eine Delegation der Administration der zu administrierenden Vorrichtung zugewiesen wurden;
- Anwenden des Filters (E3) durch die Relaisvorrichtung auf eine von dem Dritt-Administrationsserver empfangene Nachricht, die an die zu administrierende Vorrichtung gerichtet ist, wobei das Anwenden des Filters das Überprüfen, dass die von dem Dritt-Administrationsserver empfangene Nachricht den dem Dritt-Administrationsserver zugewiesenen Berechtigungen entspricht, und das Löschen von Teilen der empfangenen Nachricht, die den dem Dritt-Administrationsserver zugewiesenen Berechtigungen nicht entsprechen, umfasst.

2. Verfahren nach Anspruch 1, wobei der Filter ferner auf eine Nachricht angewandt (E2) wird, die von der zu administrierenden Vorrichtung empfangen wird und an den Dritt-Administrationsserver gerichtet ist, wobei die empfangene Nachricht durch den Filter gefiltert wird, wenn sie den dem Dritt-Administrationsserver zugewiesenen Berechtigungen nicht entspricht.

3. Verfahren nach Anspruch 1, wobei die Anforderung zur Aktivierung eine Delegationsdauer umfasst, nach der der Filter deaktiviert wird.

4. Verfahren nach Anspruch 1, wobei die Anforderung zur Aktivierung eine der Relaisvorrichtung zugeordnete Bedingung umfasst und der Filter nicht aktiviert wird oder deaktiviert wird, wenn die Bedingung nicht erfüllt ist.

5. Verfahren nach Anspruch 1, umfassend ferner zum Deaktivieren des Filters ein Senden, durch die Relaisvorrichtung an die zu administrierende Vorrichtung, eines Wechsels des Administrationsservers zum Verweis-Administrationsserver.

6. Verfahren nach Anspruch 1, wobei die Informationen bezüglich von Berechtigungen, die dem Dritt-Administrationsserver zugewiesen wurden, einen Teil eines Datenmodells umfassen, das von der zu administrierenden Vorrichtung offengelegt wird, für den der Dritt-Administrationsserver über die Berechtigungen verfügt.

7. Verfahren nach Anspruch 1, wobei die Informationen bezüglich von Berechtigungen, die einem Dritt-Administrationsserver zugewiesen wurden, ferner einen zugelassenen Administrationsvorgang umfassen.

8. Relaisvorrichtung, die dazu ausgestaltet ist, durch einen Verweis-Administrationsserver (10) fernadministriert zu werden, wobei die Relaisvorrichtung umfasst:
- ein Empfangsmodul (202), das dazu ausgestaltet ist, eine Anforderung zur Aktivierung eines Filters für die Administration einer zu administrierenden Vorrichtung von dem Verweis-Administrationsserver zu empfangen, wobei die Anforderung zur Aktivierung Informationen bezüglich von Berechtigungen umfasst, die einem Dritt-Administrationsserver (11) für eine Delegation der Administration der zu administrierenden Vorrichtung zugewiesen wurden;
- ein Filtermodul (206), das dazu ausgestaltet ist, einen Filter auf eine von dem Dritt-Administrationsserver empfangene Nachricht, die an die zu administrierende Vorrichtung gerichtet ist, anzuwenden, wobei das Anwenden des Filters das Überprüfen, dass die von dem Dritt-Administrationsserver empfangene Nachricht den dem Dritt-Administrationsserver zugewiesenen Berechtigungen entspricht, und das Löschen von Teilen der empfangenen Nachricht, die den dem Dritt-Administrationsserver zugewiesenen Berechtigungen nicht entsprechen, umfasst.

9. Administrationssystem, umfassend eine Relaisvorrichtung (20) nach Anspruch 8, einen Verweis-Administrationsserver (10) und einen Dritt-Administrationsserver (11).

10. Programm für eine Relaisvorrichtung, umfassend Programmcodeanweisungen, die dazu bestimmt sind, bei der Ausführung des Programms durch die Relaisvorrichtung die Ausführung der Schritte des Verfahrens zur Fernadministration einer zu administrierenden Vorrichtung nach einem der Ansprüche 1 bis 7 zu steuern.

11. Von einer Relaisvorrichtung lesbares Speichermedium, auf dem das Programm nach Anspruch 10 gespeichert ist.

## Claims

1. Method for remote management of a device to be managed (30-33), said method comprising:
- receipt (E1) by a relay device (20) of a request for activation of a filter for the management of said device coming from a referring administration server (10), said activation request comprising information relating to rights assigned to a third-party administration server (11) for a delegation of the management of the device to be managed;
- application of the filter (E3) by the relay device to a message received from the third-party administration server destined for the device to be managed, in which application of the filter comprises verification that the message received from the third-party administration server conforms to the rights assigned to the third-party administration server, and removal of parts of the received message that do not conform to the rights assigned to the third-party administration server.

2. Method according to Claim 1, in which the filter is furthermore applied (E2) to a message received from the device to be managed destined for the third-party administration server, the message received being filtered by the filter when it does not conform to the rights assigned to the third-party administration server.

3. Method according to Claim 1, in which the activation request comprises a delegation period, at the end of which the filter is disabled.

4. Method according to Claim 1, in which the activation request comprises a condition associated with the relay device and the filter is not activated or is disabled when said condition is not met.

5. Method according to Claim 1, furthermore comprising, for disabling the filter, sending by the relay device to the device to be managed a change of administration server to the referring administration server.

6. Method according to Claim 1, in which the information relating to rights assigned to the third-party administration server comprises a part of a data model exposed by the device to be managed, for which the third-party administration server disposes of said rights.

7. Method according to Claim 1, in which the information relating to rights assigned to a third-party administration server furthermore comprises an authorized administration operation.

8. Relay device, configured so as to be managed remotely by a referring administration server (10), said relay device comprising:
- a receiver module (202), configured for receiving a request for activation of a filter for the management of a device to be managed coming from the referring administration server, said activation request comprising information relating to rights assigned to a third-party administration server (11) for a delegation of the management of the device to be managed;
- a filtering module (206), configured for applying a filter to a message received from the third-party administration server destined for the device to be managed, in which application of the filter comprises verification that the message received from the third-party administration server conforms to the rights assigned to the third-party administration server, and removal of parts of the received message that do not conform to the rights assigned to the third-party administration server.

9. Administration system comprising a relay device (20) according to Claim 8, a referring administration server (10) and a third-party administration server (11).

10. Program for a relay device, comprising program code instructions for controlling the execution of the steps of the method for remote management of a device to be managed according to one of Claims 1 to 7 implemented by the relay device, when said program is executed by said relay device.

11. Recording medium readable by a relay device on which the program according to Claim 10 is recorded.
